# EUROPÄISCHE PATENTSCHRIFT

(11) **EP 1 596 083 B1**
(45) Veröffentlichungstag und Bekanntmachung des Hinweises auf die Patenterteilung: **25.04.2007**
(21) Anmeldenummer: 05010056.9
(22) Anmeldetag: 09.05.2005
(51) Int. Cl.: F16D 3/04, F16D 3/60

(54) **Kupplung zur drehfesten Verbindung von umlaufenden Teilen**
Coupling for the torque transmitting connection of two rotating parts
Accouplement pour la connexion en rotation de deux éléments

(30) Priorität: 14.05.2004 DE 102004024467
(43) Veröffentlichungstag der Anmeldung: 16.11.2005
(73) Patentinhaber: INKOMA MASCHINENBAU GMBH, 38162 CREMLINGEN (DE)
(72) Erfinder: Obermeier, Manfred, 38302 Wolfenbüttel (DE)
(74) Vertreter: Lins, Edgar

(56) Entgegenhaltungen:
- DE-A1- 3 233 736
- DE-C1- 4 403 555
- US-A- 4 484 899

## Beschreibung

Die Erfindung betrifft eine Kupplung zur drehfesten Verbindung von in einer Axialrichtung zu verbindenden umlaufenden Teilen mit einer ersten äußeren Schreibe, die mit einem ersten umlaufenden Teil verbindbar ist, einer zweiten äußeren Scheibe, die mit einem zweiten umlaufenden Teil verbindbar ist und mit einem Zwischenstück, das mit den beiden äußeren Scheiben über verschwenkbare Lenker verbunden ist.

Derartige Kupplungen sind in der Lage, die rotierenden Teile auch dann miteinander zu kuppeln, wenn die Drehachsen der beiden rotierenden Teile nicht genau miteinander fluchten.

Die hierfür durchgeführte relative Bewegung des Kupplungsmittelstücks zu den meist mit scheibenförmigen Flanschen verbundenen rotierenden Teilen derart, dass das Kupplungsmittelstück zu dem einen rotierenden Teil eine Verschiebebewegung ausführen kann, die senkrecht auf der entsprechenden Verschiebebewegung relativ zu dem anderen rotierenden Teil steht, ist durch die Oldham-Kupplung seit langem bekannt, bei der diese Verschiebebewegungen durch eine entsprechende Nut-Feder-Verbindung zwischen Kupplungsscheiben realisiert worden ist.

Es ist ferner seit langem bekannt, die Verschiebebewegung der mittleren Kupplungsscheibe dadurch zu steuern, dass diese mit den rotierenden Teilen, also meistens äußeren Kupplungsscheiben, über im Allgemeinen zwei drehbar angeordnete Lenker verbunden sind, wobei die jeweiligen Lenkerpaare für kleine Auslenkungen eine Parallelführung bewirken. Der Aufbau mit drei Kupplungsscheiben und jeweils zwei Zwischenräumen, in denen sich die Kupplungslenkerpaare befinden, erfordert jedoch eine gewisse Mindestlänge. Bei einer entsprechenden, aus US 4,484,899 bekannten Konstruktion werden die Lenker mit Lagerbolzen drehbar gelagert, die an einem Ende des Lenkers mit der äußeren Kupplungsscheibe und am anderen Ende des Lenkers mit einer Zwischenscheibe dadurch verbunden sind, dass sie in entsprechende Gewindebohrungen bis zu einem Anschlag eingeschraubt werden. Die Lenker werden an dem Lagerbolzen beispielsweise durch ein Nadellager drehbar gehalten. Die Lagerbolzen stellen somit separate Bauteile dar, die die jeweilige äußere Kupplungsscheibe mit der mittleren Kupplungsscheibe verbinden. Die mittlere Kupplungsscheibe kann dabei zu beiden Seiten hin offene Ausnehmungen aufweisen, um die Lenker mit einer möglicht geringen axialen Baulänge aufnehmen zu können.

Durch DE 44 03 555 C1 ist eine Ausführungsform bekannt geworden, bei der sich die Lenker auf derselben Seite der mittleren Kupplungsscheibe befinden, sodass die die Verbindung der der mittleren Kupplungsscheibe unmittelbar benachbarten äußeren Kupplungsscheibe mit den Lenkern bewirkenden Zapfen durch entsprechende Ausnehmungen der mittleren Kupplungsscheibe hindurchragen müssen.

Es sind ferner durch DE 32 33 736 C2 und DE 35 22 487 A1 Konstruktionen bekannt geworden, bei denen aufgrund ihrer elastischen Materialeigenschaften verformbare Lenker verwendet werden. Mit derartigen Konstruktionen ist das übertragbare Drehmoment begrenzt, sodass die entsprechenden Kupplungen nicht für die Übertragung großer Drehmomente verwendbar sind.

Der vorliegenden Erfindung liegt die Aufgabe zugrunde, eine Kupplung der eingangs erwähnten Art so auszubilden, dass sie mit starren Lenkern zur Übertragung großer Drehmomente aufbaubar und konstruktiv mit einer geringen axialen Baulänge realisierbar ist.

Zur Lösung dieser Aufgabe ist erfindungsgemäß eine Kupplung zur drehfesten Verbindung von umlaufenden Teilen mit den Merkmalen des Patentanspruchs 1 ausgebildet.

Die vorliegende Erfindung lehrt einen prinzipiell neuen Aufbau einer gattungsgemäßen Kupplung, bei dem die Lenker unmittelbar in den sich drehenden Teilen der Kupplung gelagert sind, sodass durch die Lenker nur ein verringerter oder gar kein Zwischenraum zwischen den äußeren Scheiben und dem Zwischenstück der Kupplung bestehen muss. Während die Lenker herkömmlicherweise mit einer Zapfen-Hülsen-Konstruktion drehbar gelagert worden sind, lagern sie nunmehr mit einem Ansatzstück unmittelbar in einer entsprechenden Aufnahme der Scheiben bzw. des Zwischenstücks. Die üblicherweise mittels eines Presssitzes erfolgte Einbringung von Drehzapfen in die Scheiben und das Zwischenstück können somit entfallen. Darüber hinaus wird der Lenkerkörper in wenigstens einer Kammer der zueinander zeigenden Flächen zumindest teilweise versenkt, wodurch die Baulänge der Kupplung herabgesetzt und die Stabilität der Lagerung erhöht wird.

Die Ansatzstücke und zugehörigen Aufnahmen können insbesondere zylindrisch oder kugelabschnittförmig ausgebildet sein und so ein Zapfenlager oder Kugellager bilden.

Der Lenkerkörper kann konstruktiv als Flachstab oder als Torsionsstab ausgebildet sein. Bei der Verwendung von zylindrischen Ansatzkörpern und Aufnahmen bildet der Lenkerkörper einen Torsionsstab, der Fluchtfehler, d.h. Beugungsfehler, kompensieren kann, ohne dadurch die Drehsteifigkeit nachteilig zu beeinflussen. Achsparallele Fluchtfehler werden somit über die Zapfen durch eine Relativbewegung kompensiert, während eventuelle Beugungsfehler über den Torsionsstab kompensiert werden.

Obwohl die Kammer für einen Lenker vollständig in einer Scheibe vorgesehen sein kann, sind in einer bevorzugten Ausführungsform in den zueinander zeigenden Flächen gleiche Aufnahmen und Kammern vorgesehen, die sich in entgegengesetzter Anordnung zur Aufnahme des Lenkers ergänzen. Wenn die Kammern eine etwa der halben Höhe des Lenkerkörpers entsprechende Tiefe aufweisen, können die Scheiben und das Zwischenstück mit einem für die Funktion benötigten minimalen Zwischenraum zueinander angeordnet werden. Die den Lenkerkörper aufnehmenden Kammern erlauben eine begrenzte Verschwenkung der Lenker zur Kompensation geringer Fluchtfehler. In einer bevorzugten Ausführungsform sind hierfür die Kammern mit Seitenwandungen versehen, die von der zylindrischen Aufnahme aus leicht konisch erweitert zueinander verlaufen.

Selbstverständlich muss konstruktiv darauf geachtet werden, dass zwischen den Scheiben soviel Luft besteht, dass bei einer anstehenden Beugung die Scheibenaußendurchmesser nicht aneinander schlagen.

Die erfindungsgemäße Kupplung lässt sich besonders einfach realisieren, wenn das Zwischenstück auf seinen beiden Flächen jeweils ein Paar Kammern und Aufnahmen aufweist, die um einen Drehwinkel von 90° zueinander versetzt sind. Dabei sind die Kammern und Aufnahmen eines Paares zweckmäßigerweise parallel und gleich gerichtet zueinander angeordnet. Die Übertragung des Drehmomentes zwischen dem Zwischenstück und der betreffenden äußeren Scheibe erfolgt somit über zwei ein Lenkerpaar bildende Lenker.

Für die Übertragung größerer Drehmomente ist es möglich, mehrere Lenker parallel als Parallelogramm anzuordnen.

Die Aufnahmen für die Ansatzstücke können ggf. mit verstärktem Material, insbesondere als Gleitlagermaterial, ausgeführt werden. Hierzu können zur Bildung der Aufnahmen in dem entsprechenden Kupplungsteil Nadel- oder Kugellager eingebracht werden.

Die erfindungsgemäßen Kupplungen lassen sich sowohl im Miniaturbereich als auch im Schwerlastbereich ausbilden und mit Vorteil einsetzen. Die Vorteile der erfindungsgemäßen Kupplungen liegen auch darin, dass - anders als bei Biegekupplungen - selbst bei Gleitlagem nur geringe Rückstellkräfte vorhanden sind, die bei Verwendung von Nadel- oder Kugellagern sogar gegen Null gehen können. Zur Anflanschung können alle herkömmlichen Varianten eingesetzt werden, also Nabenteile, eine geteilte Nabe, ein Spannring usw.

Die Erfindung soll im Folgenden anhand eines in der Zeichnung dargestellten Ausführungsbeispiels näher erläutert werden. Es zeigen:
- Figur 1: eine Seitenansicht mit Teil-Schnittdarstellungen eines Ausführungsbeispiels einer erfindungsgemäßen Kupplung
- Figur 2: einen Schnitt durch die Kupplung gemäß Figur 1 entlang der Linie A-B
- Figur 3: einen Schnitt durch die Kupplung gemäß Figur 1 entlang der Linie C-D.

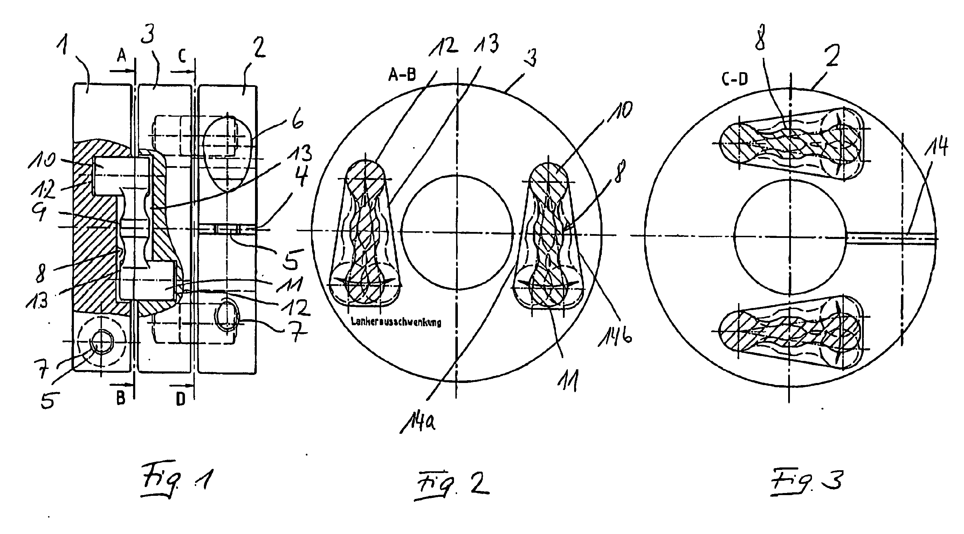

Das in Figur 1 dargestellte Ausführungsbeispiel einer erfindungsgemäßen Kupplung besteht aus einer ersten äußeren Scheibe 1, einer zweiten äußeren Scheibe 2 und einem als eine weitere Scheibe ausgebildeten Zwischenstück 3. Wie die Figuren 2 und 3 verdeutlichen, sind die Scheiben 1, 2 und des Zwischenstück 3 als kreiszylindrische Ringe ausgebildet, die in axialer Richtung aneinander montiert sind. Die beiden äußeren Scheiben 1, 2 sind als Klemmscheiben mit jeweils einem radial durchgehenden offenen Schlitz versehen, dessen Schlitzbreite mittels einer Schraube 5 zum Zwecke der Klemmung auf einer Welle verringerbar ist. In Figur 1 sind für die zweite äußere Scheibe 2 in die Umfangsfläche der Scheibe 2 eingebrachte Bohrungen 6, 7 für einen Schraubenkopf und den Schraubenbolzen erkennbar. Für die erste Scheibe 1 liegt die Bohrung 7 senkrecht zur Zeichenebene, sodass nur die Stirnseite des Bolzens der Schraube 5 erkennbar ist.

Die Verbindung der äußeren Scheiben 1, 2 mit dem Zwischenstück 3 erfolgt mittels jeweils zwei Lenker 8 eines Lenkerpaares. Der Lenker besteht aus einem sich in Längsrichtung erstreckenden Lenkerkörper 9, an dessen beiden Enden jeweils eine zylindrischer Ansatzkörper 10, 11 ausgebildet ist, wobei die beiden zylindrischen Ansatzkörper 10, 11 in entgegengesetzten axialen Richtungen von dem Lenkerkörper 9 hervorstehen.

Zur Aufnahme der Lenker 8 sind die äußeren Scheiben 1, 2 und das Zwischenstück 3 auf den zueinander zeigenden Flächen mit Ausnehmungen versehen, die jeweils eine zylindrische Aufnahme 12 und eine sich daran anschließende Kammer 13 bilden. Die zylindrische Aufnahme 12 weist dabei eine dem Vorstand des zylindrischen Ansatzkörpers 10 über den Lenkerkörper 9 entsprechende größere tiefe auf. Die Tiefe der Kammer 13 entspricht etwa der halben Höhe des Lenkerkörpers 9.

Figur 1 lässt erkennen, dass eine solche zylindrische Aufnahme 12 und die sich daran anschließende Kammer 13 sowohl in der zum Mittelstück 3 zeigenden Fläche der ersten Scheibe 1 als auch in der gegenüberliegenden Fläche des Zwischenstücks 3 angeordnet sind, sodass sich die Ausnehmungen in den zueinander zeigenden Flächen zur Aufnahme des vollständigen Lenkers 8 ergänzen. Demgemäß muss die Anordnung der zylindrischen Aufnahme 12 und der Kammer 13 in der ersten Scheibe 1 entgegengesetzt gerichtet zu der entsprechenden Anordnung in dem Zwischenstück 3 sein.

Figur 2 lässt einen Schnitt durch zwei Lenker 8 sowie eine Draufsicht auf die zylindrische Aufnahme 12 und die Kammer 13 erkennen. Die Kammer 13 ist, ausgehend von der zylindrischen Aufnahme 12 mit konisch erweitert angeordneten Seitenwänden 14a, 14b versehen, zwischen denen der Lenker 8, wie an den gegenüberüegenden Enden mit Doppelpfeilen dargestellt, einen begrenzte Schwenkbewegung ausführen kann. Da an dem die Schwenkbewegung ausführenden Ende des Lenkers 8 der zylindrische Ansatzkörper 11 angeordnet ist, der mit dem Zwischenstück 3 lediglich drehbar, jedoch nicht zu ihm verschiebbar, gelagert ist, ist die Schwenkbewegung der Lenker 8 mit einer parallelen Verschiebung des Zwischenstücks 3 relativ zu der ersten Scheibe 1 verbunden.

Figur 3 verdeutlicht, dass eine vollständig analoge Verbindung zwischen dem Zwischenstück 3 und der zweiten äußeren Scheibe 2 besteht, wobei jedoch die Lenker 8 des Lenkerpaares zwischen äußerer Scheibe 2 und Mittelstück 3 gegenüber den Lenkern 8 des Lenkerpaares zwischen der ersten äußeren Scheibe 1 und dem Zwischenstück 3 um einen Drehwinkel von 90° zueinander versetzt sind.

Es ist erkennbar, dass als äußere Scheiben 1, 2 identische Bauelemente verwendet werden können, die lediglich in um einen Drehwinkel von 90° zueinander versetzten Positionen spiegelbildlich zueinander an dem Zwischenstück 3 montiert werden. Das Zwischenstück 3 unterscheidet sich von den äußeren Scheiben 1, 2 dadurch, dass zylindrische Aufnahmen 12 und Kammern 13 auf beiden Stirnflächen des Zwischenstücks 3 (um 90° zueinander verdreht) vorgesehen sind.

Das dargestellte Ausführungsbeispiel lässt erkennen, dass eine mit sehr geringer axialer Länge bauende Kupplung realisierbar ist, deren Lenker keinen axialen Montageplatz über die drei verwendeten Scheiben 1 bis 3 hinaus erfordern. Dabei ist die Verwendung von starren Lenkern 8 möglich, da sich die Schwenkbarkeit der Lenker 8 aus der Lagerung der zylindrischen Ansatzkörper 10, 11 in den entsprechenden zylindrischen Aufnahme 12 ergibt, sodass eine Verformung der Lenker nicht erforderlich it. Die erfindungsgemäßen Kupplungen eignen sich daher zur Übertragung großer Drehmomente.

## Patentansprüche

1. Kupplung zur drehfesten Verbindung von in einer Axialrichtung zu verbindenden umlaufenden Teilen, mit einer ersten äußeren Scheibe (1), die mit einem ersten umlaufenden Teil verbindbar ist, einer zweiten äußeren Scheibe (2), die mit einem zweiten umlaufenden Teil verbindbar ist, und mit einem Zwischenstück (3) das mit den beiden äußeren Scheiben (1, 2) über verschwenkbare Lenker (8) verbunden ist, **dadurch gekennzeichnet, dass** die Lenker jeweils einen sich über ihre Länge erstreckenden Lenkerkörper (9) und an den Enden jeweils einen Ansatzkörper (10, 11) aufweisen, die in entgegengesetzten axialen Richtungen vom Lenkerkörper (8) hervorstehen, dass die Ansatzkörper (10, 11) in entsprechende, durch Ausnehmungen gebildete Aufnahmen (12) in den zueinander zeigenden Flächen von Zwischenstück (3) und äußerer Scheibe (1, 2) eingesteckt sind, dass auf wenigstens einer der zueinander zeigenden Flächen eine durch eine Ausnehmung gebildete Kammer (13) zur Aufnahme des Lenkerkörpers (8) über wenigstens einen Teil seiner Höhe vorgesehen ist und dass die Breite der Kammer (13) für eine begrenzte Schwenkbewegung des Lenkers (8) dimensioniert ist.

2. Kupplung nach Anspruch 1, **dadurch gekennzeichnet, dass** die Ansatzkörper (10, 11) und Aufnahmen (12) zylindrisch ausgebildet sind.

3. Kupplung nach Anspruch 1, **dadurch gekennzeichnet, dass** die Ansatzkörper (10, 11) und Aufnahmen (12) kugelabschnittförmig ausgebildet sind.

4. Kupplung nach einem der Ansprüche 1 bis 3, **dadurch gekennzeichnet, dass** in den zueinander zeigenden Flächen gleiche Aufnahmen (12) und Kammern (13) vorgesehen sind, die sich in entgegengesetzter Anordnung zur Aufnahme des Lenkers (8) ergänzen.

5. Kupplung nach Anspruch 4, **dadurch gekennzeichnet, dass** die Kammern (13) eine etwa der halben Höhe des Lenkerkörpers (9) entsprechende Tiefe aufweisen.

6. Kupplung nach einem der Ansprüche 1 bis 5, **dadurch gekennzeichnet, dass** die Kammern (13) Seitenwandungen (14a, 14b) aufweisen, die von der zylindrischen Aufnahme (12) aus leicht konisch erweitert zueinander verlaufen.

7. Kupplung nach einem der Ansprüche 1 bis 6, **dadurch gekennzeichnet, dass** das Zwischenstück (3) auf seinen beiden Flächen jeweils ein Paar Kammern (13) und Aufnahmen (12) aufweist, die um einen Drehwinkel von 90° zueinander versetzt sind.

8. Kupplung nach einem der Ansprüche 1 bis 7, **dadurch gekennzeichnet, dass** die Kammern (13) und Aufnahmen (12) eines Paares parallel und gleichgerichtet zueinander angeordnet sind.

9. Kupplung nach einem der Ansprüche 1 bis 8, **dadurch gekennzeichnet, dass** das Zwischenstück (3) durch eine den Abmessungen der beiden äußeren Scheiben (1, 2) entsprechende weitere Scheibe gebildet ist.

## Claims

1. Coupling for the rotationally fixed connection of revolving parts to be connected in an axial direction, with a first outer disc (1) which is connectable to a first revolving part, with a second outer disc (2) which is connectable to a second revolving part and with an intermediate piece (3) which is connected to the two outer discs (1, 2) via pivotable links (8), **characterized in that** the links each have a link body (9) extending over their length and an extension body (10, 11) at each of the ends, the said extension bodies projecting from the link body (8) in opposite axial directions, **in that** the extension bodies (10, 11) are plugged into corresponding receptacles (12), formed by recesses, in the mutually confronting surfaces of the intermediate piece (3) and of the outer disc (1, 2), **in that**, on at least one of the mutually confronting surfaces, a chamber (13) formed by a recess is provided for receiving the link body (8) over at least part of its height, and **in that** the width of the chamber (13) is dimensioned for a limited pivoting movement of the link (8).

2. Coupling according to Claim 1, **characterized in that** the extension bodies (10, 11) and the receptacles (12) are of cylindrical design.

3. Coupling according to Claim 1, **characterized in that** the extension bodies (10, 11) and the receptacles (12) are designed in the form of a spherical segment.

4. Coupling according to one of Claims 1 to 3, **characterized in that** identical receptacles (12) and chambers (13) are provided in the mutually confronting surfaces and complete one another in an opposite arrangement for reception of the link (8).

5. Coupling according to Claim 4, **characterized in that** the chambers (13) have a depth corresponding approximately to half the height of the link body (9).

6. Coupling according to one of Claims 1 to 5, **characterized in that** the chambers (13) have side walls (14a, 14b) which run, starting from the cylindrical receptacle (12), slightly widened conically, relative to each other.

7. Coupling according to one of Claims 1 to 6, **characterized in that** the intermediate piece (3) has on each of its two surfaces a pair of chambers (13) and receptacles (12) which are offset at an angle of rotation of 90° with respect to one another.

8. Coupling according to one of Claims 1 to 7, **characterized in that** the chambers (13) and the receptacles (12) of a pair are arranged parallel and codirectionally with respect to one another.

9. Coupling according to one of Claims 1 to 8, **characterized in that** the intermediate piece (3) is formed by a further disc corresponding to the dimensions of the two outer discs (1, 2).

## Revendications

1. Accouplement pour la connexion fixe en rotation de parties rotatives destinées à être connectées dans une direction axiale, comprenant un premier disque extérieur (1) destiné à être connecté avec une première partie rotative, un second disque extérieur (2) destiné à être connecté avec une seconde partie rotative, et une pièce intermédiaire (3) qui est reliée aux deux disques extérieurs (1, 2) au moyen de bielles pivotantes (8), **caractérisé en ce que** chaque bielle présente un corps de bielle (9) s'étendant suivant sa longueur, et à chacune de ses extrémités, un corps d'embout (10, 11) qui tous deux font saillies dans des directions opposées à partir du corps de bielle (8), **en ce que** les corps d'embout (10, 11) sont engagés dans des logements (12) correspondants constitués par des évidements pratiqués dans les faces adjacentes de la pièce intermédiaire (3) et des disques extérieurs (1, 2), **en ce que**, sur au moins une des faces adjacentes, est prévue une chambre (13) formée par un évidement pour recevoir le corps de bielle (8) sur au moins une partie de sa hauteur, et **en ce que** la largeur de la chambre (13) est dimensionnée pour permettre un mouvement oscillant limité de la bielle (8).

2. Accouplement selon la revendication 1, **caractérisé en ce que** les corps d'embout (10, 11) et les évidements (12) sont réalisés de façon cylindrique.

3. Accouplement selon la revendication 1, **caractérisé en ce que** les corps d'embout (10, 11) et les évidements (12) sont réalisés sous forme de section de sphère.

4. Accouplement selon l'une des revendications 1 à 3, **caractérisé en ce que**, dans les faces adjacentes, sont prévus des évidements (12) et des chambres (13) identiques qui se complètent dans une disposition opposée pour recevoir la bielle (8).

5. Accouplement selon la revendication 4, **caractérisé en ce que** les chambres (13) présentent une profondeur correspondant approximativement à la moitié de la hauteur du corps de bielle (9).

6. Accouplement selon l'une des revendications 1 à 5, **caractérisé en ce que** les chambres (13) présentent des parois latérales (14a, 14b) qui, à partir du logement cylindrique (13), s'étendent de façon légèrement conique en s'écartant l'une de l'autre.

7. Accouplement selon l'une des revendications 1 à 6, **caractérisé en ce que** la pièce intermédiaire (3) présente, sur chacune de ses deux faces, une paire de chambres (12) et de logements (12) qui sont décalées l'une de l'autre suivant un angle de rotation de 90°.

8. Accouplement selon l'une des revendications 1 à 7, **caractérisé en ce que** les chambres (13) et les logements (12) d'une paire sont disposées de façon parallèle et dans la même direction l'une par rapport à l'autre.

9. Accouplement selon l'une des revendications 1 à 8, **caractérisé en ce que** la pièce intermédiaire (3) est formée par un autre disque sous-dimensionné par rapport aux deux disques extérieurs (1, 2).
